# EUROPEAN PATENT SPECIFICATION

(11) **EP 1 797 936 B1**
(45) Date of publication and mention of the grant of the patent: **26.01.2011**
(21) Application number: 06125933.9
(22) Date of filing: 12.12.2006
(51) Int. Cl.: B01D 39/00, B01D 53/88, B01J 35/00

(54) **Covering for air pollution abatement and method for making the covering**
Abdeckung zur Luftverschmutzungsbekämpfung und Verfahren zur Herstellung der Abdeckung
Couverture pour la réduction de la pollution atmosphérique et procédé de fabrication de ladite couverture

(30) Priority: 13.12.2005 IT BO20050757
(43) Date of publication of application: 20.06.2007
(73) Proprietor: Next Technology Tecnotessile Societa' Nazionale di Ricerca R.L., 59100 Prato (PO) (IT)
(72) Inventor: Nesti, Solitario, 51030 San Baronto Lamporecchio (Pistoia) (IT); Tucci, Stefano, 59100, Prato (IT); Corsi, Leopoldo, 56038, Ponsacco (Pisa) (IT); Vannini, Patrizio, 59021, Vaiano (Prato) (IT)
(74) Representative: Lanzoni, Luciano

(56) References cited:
- EP-A- 1 008 565
- EP-A1- 0 960 644
- WO-A-96/37281
- WO-A-03/087002
- JP-A- 2005 264 386
- US-B1- 6 362 121
- US-B1- 6 465 088

## Description

This invention relates to a covering for structures or objects for the abatement of air pollution and a method for making the covering.

As is known, some organic and inorganic substances such as, for example, certain products of hydrocarbon combustion, responsible for air pollution and for the greenhouse effect, can be broken down into substances that are not harmful to the environment.

The reactions by which pollutants are broken down can be facilitated by materials that have come to be known as photocatalysts because of their catalytic properties. These materials require energy to trigger the desired reactions.

Devices based on the catalytic properties of photocatalytic materials have been developed to abate atmospheric pollution.

These abatement devices are designed especially to combat pollution in urban areas and use photocatalytic materials dispersed in compounds of various kinds.

In particular, prior art devices of this kind include bricks, tiles and cements containing particles of photocatalytic substances dispersed in them more or less uniformly. The abatement effect is achieved by simply exposing the devices to the polluted air to be cleaned.

For example, in document US 6362121 is described a substrate, like a paint or a glaze, with a photocatalytic coating.

Another example of air purifying system using photocatalytic substances is described in document WO 96/37281, in which is disclosed an apparatus for purifying air using a filter which comprises a photocatalytic particles.

Without going into the details of the chemical reactions which take place and which are well known to experts in this field, basically, in these devices, gases such as nitrogen oxides and organic compounds filter through the surface of the device (be it brick, tile or cement) and are bonded with the particles of photocatalytic material. To activate the photocatalytic material, it is sufficient for it to absorb ultraviolet rays. The resulting reaction breaks the pollutants down into different substances which can then be removed from the device. The breakdown substances might, for example, be washed away by the rain which transforms them into products that are not harmful to the environment. Nitrogen dioxide and monoxide, for instance, are transformed into nitrate ions. The breakdown substances that build up on the surface of the photocatalytic material reduce the latter's effectiveness and the rain, by washing these substances away, therefore also restores this effectiveness.

These prior art devices, however, have the disadvantage of not being able to be used easily in existing structures, built, for example, with conventional bricks or covered with conventional tiles.

In other words, prior art devices are not very versatile. Thus, in the case of pollution abatement devices consisting of tiles comprising dispersed photocatalytic materials, use in existing structures such as, for example, garage or workshop flooring, means removing all the old tiles and replacing them with the pollution abatement devices.

The problem may even be insurmountable in the case of prior art devices consisting of bricks comprising photocatalytic materials whose correct installation would mean pulling down and rebuilding the entire structure.

Moreover, since restoring the effectiveness of the photocatalytic materials is left to the rain, prior art devices are not particularly suitable for use in regions with low rainfall, though such regions may have an abundant water supply.

In this context, this invention has for its main technical purpose to propose an air pollution abatement covering and a method for making the covering capable of overcoming the above mentioned disadvantages.

In particular, this invention aims to provide an air pollution abatement covering that is easy to install in existing structures.

Another aim of the invention is to provide an air pollution abatement covering whose effectiveness is independent of rainfall.

Yet another aim of the invention aims is to provide an air pollution abatement covering that is versatile.

The above mentioned technical purpose and aims are substantially achieved by an air pollution abatement covering for structures or objects and a method for making the covering having the technical characteristics described in one or more of the attached claims.

Other characteristics and advantages of the invention will become more apparent from the detailed description which follows, with reference to a preferred, non-limiting embodiment of an air pollution abatement covering for structures or objects and of a method for making the covering, as illustrated in the accompanying drawings, in which:
- Figure 1 is a scaled-up perspective view of an air pollution abatement covering for structures or objects according to this invention;
- Figure 2 is a cross section of the covering of Figure 1;
- Figure 3 schematically illustrates an example application of the covering of Figure 1; and
- Figure 4 is a scaled-up perspective view of an alternative embodiment of the covering of Figure 1.

With reference to the accompanying drawings, the numeral 1 denotes in its entirety an air pollution abatement covering for structures or objects according to this invention.

The covering 1 comprises a textile substrate 2, a layer of polymeric material 3 laid over at least one portion of the textile substrate 2 and a multiplicity of particles 4 of photocatalytic material positioned on at least one portion of the polymeric material.

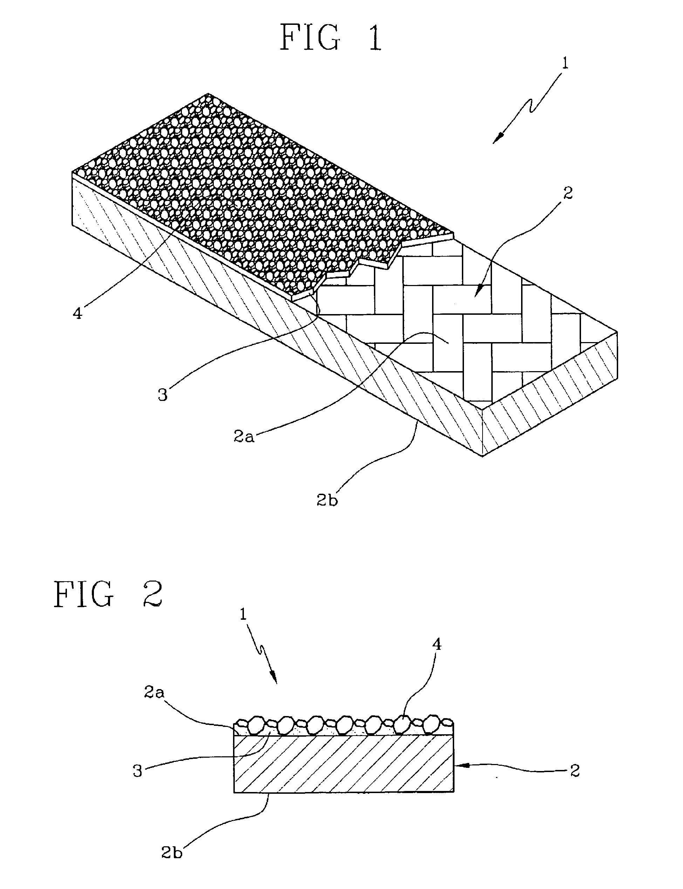

Advantageously, the particles 4 of photocatalytic material - which, in Figures 1, 2 and 4, are intentionally shown not to scale with respect to the other components of the device 1 in order to better illustrate them - protrude at least partly from the layer 3 of polymeric material on the side opposite the textile substrate 2 so as to be at least partly exposed to the surrounding air. Indeed, it should be noticed that the pollution abatement effect of the covering 1 is not achieved by filtering the air but by mere contact between the photocatalytic material and the air.

In the preferred embodiment illustrated in Figures 1 and 2, the substrate 2 consists of a fabric and has a first and a second surface 2a and 2b opposite each other. The polymeric layer 3 is located on the surface 2a of the textile substrate 2 and acts as an adhesive that retains the photocatalytic particles 4 and keeps them attached to the textile substrate 2. More specifically, all the photocatalytic particles 4 are located on the surface of the polymeric layer 3 opposite the layer that is in direct contact with the first surface 2a of the textile substrate and protrude at least partially from the polymeric layer 3 itself. In other words, none of the photocatalytic particles 4 is fully covered by the polymeric layer 3.

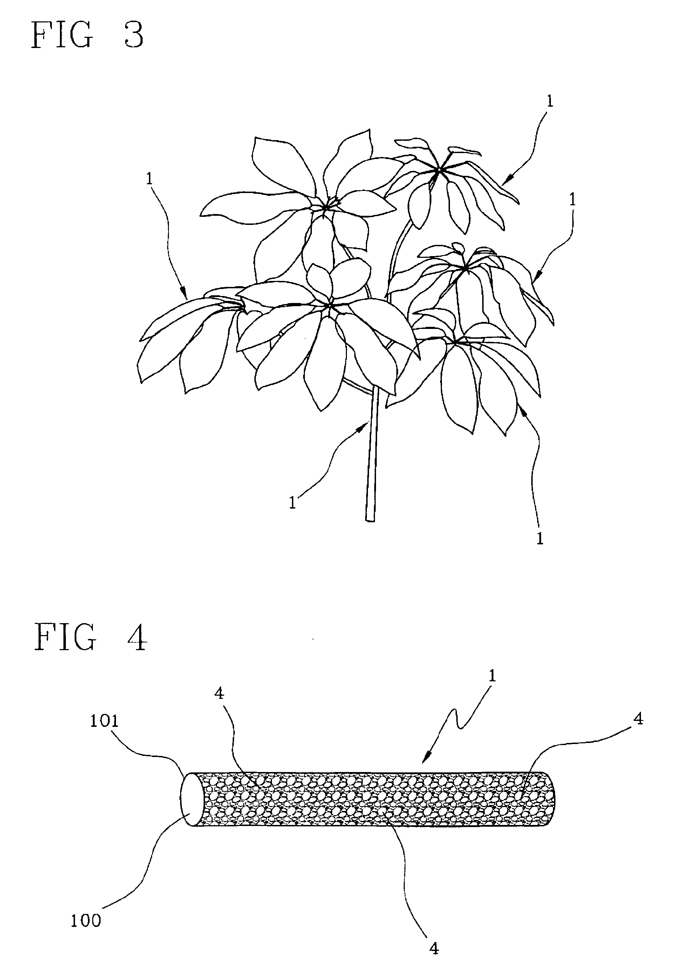

In an alternative embodiment, illustrated in Figure 4, the textile substrate 2 consists of a yarn 100, preferably natural. The term "yarn", in the context of this invention, means an elongated element such as a thread. The yarn 100 comprises an outside surface 101 covered by the layer 3 of polymeric material which acts as an adhesive that retains the photocatalytic particles 4 and keeps them attached to the yarn 100.

If the yarn 100 is a synthetic yarn, the polymeric layer 3 is not physically distinguishable from the yarn. In fact, in this case, the textile substrate 2 consists of polymeric material and thus, the polymeric layer 3 consists of the outer layer of the synthetic yarn 100. In other words, in this embodiment the polymeric layer 3 coincides with the outside surface of the synthetic yarn 100. In this embodiment too, however, all the photocatalytic particles 4 are located on the surface of the polymeric layer 3, that is to say, on the surface of the synthetic yarn 100, and protrude at least partially from the polymeric layer 3 itself. In other words, none of the photocatalytic particles 4 is fully covered by the polymeric layer 3.

This characteristic maximizes the catalytic effect of the particles 4 since they are in direct contact with the air to be cleaned. It should be specified that, in this context of this invention, "none of the particles" means no significant number of particles. In other words, although some particles of photocatalytic material may be totally covered by the polymeric layer, the number of these particles is an insignificant fraction of the particles located on, and protruding from, the polymeric layer.

Advantageously, the photocatalytic material is titanium dioxide. More specifically, it is undoped titanium dioxide (in the form of rutile, anatase or a mixture of the two) or titanium dioxide doped with metal oxides, is highly reactive and may be chemically activated by relatively low energy, in the order of 3.2 eV. The photocatalytic material used can be activated by a wide, solar radiation spectrum. In particular, if undoped titanium dioxide is used, activation occurs at wavelengths between 290 nm and 390 nm, whereas if the titanium oxide used is doped, activation occurs at wavelengths between 300 nm and 600 nm.

Also advantageously, the particles 4 of titanium dioxide are substantially spherical in shape in order to optimize the surface/volume ratio and to obtain, under equal conditions of mass of particles 4 used, the maximum surface of exchange with the air to be cleaned.

In particular, the titanium dioxide particles have characteristic dimensions, that is to say, the equivalent diameter of a sphere of mass equal to the mass of the particles, is between 20 nanometres and 5 microns, preferably between 50 and 300 nanometres.

As regards the polymeric layer 3, it consists of a thermoplastic or thermosetting polymer. The surface density of the polymeric layer 3 is, in the preferred embodiment, between 5 grams per square metre and 500 grams per square metre, preferably 100 grams per square metre. It has been observed experimentally that decreasing the size of the titanium dioxide particles 4 increases the efficiency of the covering 1. However, decreasing the size of the titanium dioxide particles 4 increases its production costs and therefore the preferred value indicated above is an optimum point derived from the size/efficiency and size/costs curves for the titanium dioxide particles.

As stated, the layer 3 of polymeric material is designed to retain the titanium dioxide particles 4 on the textile substrate 2; the layer 3 of polymeric material thus guarantees that the titanium dioxide particles 4 remain firmly fixed to the surface of the polymeric layer 3. Similarly, the polymeric layer 3 must be able to be firmly attached to the underlying textile substrate 2 and therefore, the choice of the type of polymer to be used depends on the type of textile substrate 2 used.

Advantageously, in this regard, the textile substrate 2 may be any woven or non-woven fabric, of natural or synthetic fibre.

In the alternative embodiment where the textile substrate 2 is a synthetic yarn 100, the polymeric layer 3 consists, as already stated, of the outside surface of the yarn 100 itself. In this case, evidently, the polymeric layer 3 is firmly attached to the substrate 2 irrespective of the type of polymer the latter is made of.

Whatever the type of textile substrate used, the latter confers on the covering 1 a high degree of flexibility, making it adaptable for covering any existing structure or object.

Below are a few example embodiments of the covering 1 described above, including details of experimental tests on its effectiveness in reducing air pollutants, in particular nitrogen monoxide.

### Example 1:

The covering comprises a layer of woven glass fibre fabric measuring 12 x 12 cm, a layer of reactive polyurethane having a surface density of 50 grams per square metre and, located on the surface thereof, a multiplicity of titanium dioxide particles having a surface density of 2.5 grams per square metre and partially protruding from said surface. The monitored pollutant is nitrogen monoxide.

The covering was exposed to radiation in the UV spectrum from 290 nm to 390 nm having a power (effective irradiance) greater than 8 Watts per square metre.

This radiation was emitted by a lamp positioned 30 cm away from the surface of the covering for predetermined lengths of time. The nitrogen monoxide abatement was measured at regular intervals.

The results were parameterized as a function of the mean daily solar radiation for the month of June at the latitude of the city of Florence.

In other words, starting from the experimental data, we calculated the effect of the covering exposed to UV radiation as defined above for a period of 3 hours, equivalent to exposure to air polluted by 110 ppm (parts per million) of NO for the entire month of June.

The results are shown in the table below:

| | |
|---|---|
| Initial NO concentration (ppm) | 110 |
| NO concentration (ppm) after exposure for 3 hours | 100 |
| Mean daily NO abatement per square metre (ppm) | 23 |

### Example 2:

The covering and test conditions were the same as those of example 1. During the test, the covering was exposed to air polluted by 110 ppm of NO and irradiated by the above mentioned UV radiation for 3 hours. After this, the covering was exposed to air polluted by 110 ppm of NO for another 3 hours.

After these two tests, the covering was washed with running water and again exposed to air polluted by 110 ppm of NO for 3 hours.

The results are shown below:

| | |
|---|---|
| Initial NO concentration (ppm) | 110 |
| NO concentration (ppm) after first exposure time | 97 |
| Mean daily NO abatement per square metre (ppm) | 30 |

| | |
|---|---|
| Initial NO concentration (ppm) | 110 |
| NO concentration (ppm) after second exposure time | 106 |
| Mean daily NO abatement per square metre (ppm) | 9 |

| | |
|---|---|
| Initial NO concentration (ppm) | 110 |
| NO concentration (ppm) after washing and third exposure time | 99 |
| Mean daily NO abatement per square metre (ppm) | 25 |

### Example 3:

The test conditions were the same as those of example 1. The covering was the same as that of example 1 except that the nominal dimensions of the titanium dioxide particles were micrometric. During the test, the covering was exposed to air polluted by 110 ppm of NO and irradiated by the above mentioned UV radiation for 3 hours.

The results are shown below:

| | |
|---|---|
| Initial NO concentration (ppm) | 110 |
| NO concentration (ppm) after exposure for 3 hours | 96 |
| Mean daily NO abatement per square metre (ppm) | 32 |

### Example 4:

The test conditions were the same as those of example 1 and the covering was the same as that of example 1 except that the layer of reactive polyurethane had a surface density of 100 grams per square metre.

During this test, the covering was exposed to air polluted by 110 ppm of NO and irradiated by the above mentioned UV radiation for 3 hours.

The results are shown below:

| | |
|---|---|
| Initial NO concentration (ppm) | 110 |
| NO concentration (ppm) after exposure for 3 hours | 100 |
| Mean daily NO abatement per square metre (ppm) | 23 |

### Example 5:

The test conditions were the same as those of example 1 and the covering was the same as that of example 4 except that the dimensions of the titanium dioxide particles were nanometric.

During the test, the covering was exposed to air polluted by 110 ppm of NO and irradiated by the same UV radiation for 3 hours.

The results are shown below:

| | |
|---|---|
| Initial NO concentration (ppm) | 110 |
| NO concentration (ppm) after exposure for 3 hours | 82 |
| Mean daily NO abatement per square metre (ppm) | 65 |

In similar tests in which other pollutants were monitored, the results were similar.

As already stated, the tests showed that, irrespective of the textile substrate 2 used, the smaller the dimensions of the titanium dioxide particles 4, the higher the air pollution abatement effect.

Further, to restore the effectiveness of the covering 1, it is sufficient to wash it with running water. In other words, the covering 1 can be fully reconditioned by simply removing it from its working position and washing it with running water.

In this connection, it should be stressed that the covering 1 can be used in a wide variety of applications.

In particular, as illustrated in Figure 3, the covering 1 can be used to make artificial leaves and artificial trees that could be used as urban furnishings to abate pollution. If necessary the trunks of such trees might also be covered with the covering 1.

In another application, the covering 1 might be used to make roadside sound absorption barriers designed to reduce not only the noise pollution but also the air pollution produced by the combustion engines of the vehicles. In this application, the textile substrate 2 consists, for example, of a porous and suitably shaped fabric.

The covering 1 might also be used to make synthetic grass for playing fields. Advantageously, the covering 1 can be used to make advertising billboards which, after prolonged use, might be washed to restore their pollution abatement effectiveness.

The covering 1 could also be used to make tarpaulins for covering truck trailers.

The air pollution abatement covering 1 is made by providing the textile substrate 2 with a layer 3 of polymeric material and depositing on the polymeric layer a multiplicity of particles 4 of photocatalytic material.

In the preferred embodiment, the polymeric material is deposited on the textile substrate 2. More specifically, the polymeric material is applied in a liquefied state to the surface of the textile substrate 2 using the "hot melting" method. In particular, the thermoplastic material is applied in laminar form using an extrusion head.

In the alternative embodiment where the textile substrate is a natural yarn 100, the polymeric material is applied in the liquefied state to the entire surface of the yarn 100 using the "hot melting" method. In particular, the thermoplastic material is applied in circular form to the yarn 100 using an extrusion head.

Alternatively, the polymeric layer 3 can be sprayed onto the textile substrate 2 using ink-jet technology, and spread with a doctor blade or cylinder.

Advantageously, whether the textile substrate 2 is a fabric or a natural yarn, the multiplicity of particles 4 is deposited only on the surface of the polymeric layer 3 so that the particles are in direct contact, at least partially, with the air to be cleaned.

To accomplish this result, the particles 4 are deposited on the polymeric layer 3 before the latter has solidified, that is to say, while the polymeric layer 3 is still soft. Thus, the particles 4 of photocatalytic material only partially penetrate the polymeric layer 3 and, although attached indissolubly, protrude at least partially from the polymeric layer 3.

In the alternative embodiment where the textile substrate 2 is a synthetic yarn, the step of depositing the polymeric material 3 may be omitted and the particles of photocatalytic material deposited in aqueous phase. In particular, the particles of photocatalytic material are applied to the surface of the yarn directly in the cooling tank at the end of the extrusion process before the yarn solidifies.

Advantageously, the first surface of the textile substrate 2 may be coloured or patterned before being coated with the polymeric material. Thus, if the polymeric material is substantially transparent, it is possible, for example, to use the covering 1 to display an advertisement or to form the covering 1 into the shape of a leaf.

Alternatively, the polymeric material of the layer 3 may be coloured with pigments.

## Claims

1. A covering for structures or objects for air pollution abatement comprising:
- a textile substrate (2)
- a layer (3) of polymeric material laid over or coinciding with at least one portion of the textile substrate (2);
- a multiplicity of particles (4) of photocatalytic material positioned on at least one surface portion of the polymeric material and retained by adhesion on said polymeric material; **characterised in that**
all the particles. (4) of photocatalytic material protrude at least partially from the layer (3) of polymeric material on the side opposite the textile substrate (2) and are at least partly in direct contact with the air surrounding the covering.

2. The covering according to claim 1, **characterised in that** the photocatalytic material is titanium dioxide.

3. The covering according to any of the foregoing claims, **characterised in that** the particles (4) have characteristic dimensions of between 20 nanometres and 5 microns, preferably 180 nanometres.

4. The covering according to any of the foregoing claims, **characterised in that** the particles (4) are substantially spherical in shape.

5. The covering according to any of the foregoing claims, **characterised in that** the polymeric material is a thermoplastic polymer.

6. The covering according to any of the foregoing claims, **characterised in that** the layer of polymeric material has a surface density of between 5 grams per square metre and 500 grams per square metre, preferably 100 grams per square metre.

7. The covering according to any of the foregoing claims, **characterised in that** the textile substrate (2) consists of a single natural yarn (100).

8. The covering according to any of the foregoing claims from 1 to 4, **characterised in that** the textile substrate (2) consists of a synthetic yarn (100).

9. The covering according to claim 8, **characterised in that** the layer (3) of polymeric material is defined by the outside surface of the yarn (100) and coincides with said surface.

10. A method for making an air pollution abatement covering for structures or objects comprising the steps of: providing a textile substrate (2) with a layer (3) of polymeric material and depositing on the surface of the polymeric layer (3) a multiplicity of particles (4) of photocatalytic material; said particles (4) of photocatalytic material being positioned on at least one surface portion of the polymeric material and being retained by adhesion on said polymeric material, depositing the layer (3) of polymeric material on the textile substrate (2) **characterised in that** the particles (4) of photocatalytic material are deposited only on the surface of the layer (3) of polymeric material so as to be at least partly exposed to the air surrounding the covering.

11. The method according to claim 10, **characterised in that** the step of depositing the layer (3) of polymeric material on the textile substrate (2) comprises the step of applying to the fabric the layer (3) of polymeric material in the liquefied state.

12. The method according to claim 11, **characterised in that** the liquefied polymeric material is applied in laminar form using an extrusion head.

13. The method according to claim 11, **characterised in that** the liquefied polymeric material is applied to the fabric by spraying.

14. The method according to any of the foregoing claims from 10 to 13, **characterised in that** the step of applying photocatalytic particles (4) to the layer (3) of polymeric material comprises the step of applying photocatalytic particles (4) substantially spherical in shape.

15. The method according to any of the foregoing claims from 10 to 14, **characterised in that** the particles (4) of photocatalytic material are deposited on the layer (3) of polymeric material before the polymeric layer solidifies.

16. The method according to claim 11 **characterised in that** the particles (4) of photocatalytic material are deposited on the polymeric layer in aqueous phase during the solidification of the polymeric layer.

17. Use of an air pollution abatement covering according to any of the foregoing claims from 1 to 10 to make artificial grass.

18. Use of an air pollution abatement covering according to any of the foregoing claims from 1 to 10 to make sound absorption barriers.

19. Use of an air pollution abatement covering according to any of the foregoing claims from 1 to 10 to make artificial leaves.

20. Use of an air pollution abatement covering according to any of the foregoing claims from 1 to 10 to make artificial trees.

21. Use of an air pollution abatement covering according to any of the foregoing claims from 1 to 10 to make tarpaulins for covering truck trailers.

22. Use of an air pollution abatement covering according to any of the foregoing claims from 1 to 10 to make advertising billboards.

## Patentansprüche

1. Abdeckung zur Luftverschmutzungsbekämpfung für Strukturen oder Gegenstände, Folgendes beinhaltend:
- ein textiles Substrat (2)
- eine Schicht (3) aus polymerem Werkstoff, die über zumindest einem Abschnitt des textilen Substrates (2) aufgebracht ist oder mit diesem übereinstimmt;
- mehrere Partikel (4) aus photokatalytischem Material, die auf zumindest einem Oberflächenabschnitt des polymeren Werkstoffes aufgebracht werden und durch Adhäsion auf dem polymeren Werkstoff festgehalten werden;
**dadurch gekennzeichnet, dass**
alle Partikel (4) aus photokatalytischem Material zumindest teilweise von der Schicht (3) aus polymerem Werkstoff auf der dem textilen Substrat (2) gegenüberliegenden Seite hervorragen und zumindest teilweise in direktem Kontakt mit der die Abdeckung umgebenden Luft sind.

2. Abdeckung nach Anspruch 1, **dadurch gekennzeichnet, dass** das photokatalytische Material Titandioxid ist.

3. Abdeckung nach einem der vorhergehenden Ansprüche, **dadurch gekennzeichnet, dass** die Partikel (4) charakteristische Abmessungen im Bereich von 20 Nanometern bis 5 Mikrometern aufweisen, und vorzugsweise 180 Nanometer.

4. Abdeckung nach einem der vorhergehenden Ansprüche, **dadurch gekennzeichnet, dass** die Partikel (4) im Wesentlichen kugelförmig sind.

5. Abdeckung nach einem der vorhergehenden Ansprüche, **dadurch gekennzeichnet, dass** der polymere Werkstoff ein thermoplastisches Polymer ist.

6. Abdeckung nach einem der vorhergehenden Ansprüche, **dadurch gekennzeichnet, dass** die Schicht aus polymerem Werkstoff eine Oberflächendichte im Bereich von 5 Gramm pro Quadratmeter bis 500 Gramm pro Quadratmeter und vorzugsweise 100 Gramm pro Quadratmeter aufweist.

7. Abdeckung nach einem der vorhergehenden Ansprüche, **dadurch gekennzeichnet, dass** das textile Substrat (2) aus einem einzelnen natürlichen Garn (100) besteht.

8. Abdeckung nach einem der vorhergehenden Ansprüche von 1 bis 4, **dadurch gekennzeichnet, dass** das textile Substrat (2) aus einem synthetischen Garn (100) besteht.

9. Abdeckung nach Anspruch 8, **dadurch gekennzeichnet, dass** die Schicht (3) aus polymerem Werkstoff durch die Außenoberfläche des Garns (100) definiert ist und mit dieser Oberfläche übereinstimmt.

10. Verfahren zur Herstellung einer Abdeckung zur Luftverschmutzungsbekämpfung für Strukturen oder Objekte, folgende Schritte beinhaltend: Bereitstellen eines textilen Substrates (2) mit einer Schicht (3) aus polymerem Werkstoff und Aufbringen mehrerer Partikel (4) aus photokatalytischem Material auf der Oberfläche der Polymerschicht (3); wobei die Partikel (4) aus photokatalytischem Material auf zumindest einem Oberflächenabschnitt des polymeren Werkstoffes angeordnet werden und durch Adhäsion auf dem polymeren Werkstoff gehalten werden; Aufbringen der Schicht (3) aus polymerem Werkstoff auf das textile Substrat (2);
**dadurch gekennzeichnet, dass** die Partikel (4) aus photokatalytischem Material nur auf der Oberfläche der Schicht (3) aus polymerem Werkstoff aufgebracht werden, so dass sie zumindest teilweise der die Abdeckung umgebenden Luft ausgesetzt sind.

11. Verfahren nach Anspruch 10, **dadurch gekennzeichnet, dass** der Schritt des Aufbringens der Schicht (3) aus polymerem Werkstoff auf dem textilen Substrat (2) den Schritt des Auftragens der Schicht (3) aus polymerem Werkstoff in verflüssigtem Zustand auf die textile Fläche beinhaltet.

12. Verfahren nach Anspruch 11, **dadurch gekennzeichnet, dass** der verflüssigte polymere Werkstoff flächenförmig unter Verwendung eines Extrusionskopfes aufgetragen wird.

13. Verfahren nach Anspruch 11, **dadurch gekennzeichnet, dass** der verflüssigte polymere Werkstoff durch Sprühen auf die textile Fläche aufgebracht wird.

14. Verfahren nach einem der vorhergehenden Ansprüche von 10 bis 13, **dadurch gekennzeichnet, dass** der Schritt des Aufbringens photokatalytischer Partikel (4) auf die Schicht (3) aus polymerem Werkstoff den Schritt des Aufbringens von photokatalytischen Partikeln (4) mit im Wesentlichen kugelförmiger Gestalt beinhaltet.

15. Verfahren nach einem der vorhergehenden Ansprüche von 10 bis 14, **dadurch gekennzeichnet, dass** die Partikel (4) aus photokatalytischem Material auf der Schicht (3) aus polymerem Werkstoff aufgebracht werden, bevor die Polymerschicht aushärtet.

16. Verfahren nach Anspruch 11, **dadurch gekennzeichnet, dass** die Partikel (4) aus photokatalytischem Material auf der Polymerschicht in wässriger Phase während der Aushärtung der Polymerschicht aufgebracht werden.

17. Verwendung einer Abdeckung zur Luftverschmutzungsbekämpfung nach einem der vorhergehenden Ansprüche von 1 bis 10 zur Herstellung von künstlichem Gras.

18. Verwendung einer Abdeckung zur Luftverschmutzungsbekämpfung nach einem der vorhergehenden Ansprüche von 1 bis 10 zur Herstellung von Schallschutzbarrieren.

19. Verwendung einer Abdeckung zur Luftverschmutzungsbekämpfung nach einem der vorhergehenden Ansprüche von 1 bis 10 zur Herstellung von künstlichen Blättern.

20. Verwendung einer Abdeckung zur Luftverschmutzungsbekämpfung nach einem der vorhergehenden Ansprüche von 1 bis 10 zur Herstellung von künstlichen Bäumen.

21. Verwendung einer Abdeckung zur Luftverschmutzungsbekämpfung nach einem der vorhergehenden Ansprüche von 1 bis 10 zur Herstellung von Abdeckplanen für LKW-Anhänger.

22. Verwendung einer Abdeckung zur Luftverschmutzungsbekämpfung nach einem der vorhergehenden Ansprüche von 1 bis 10 zur Herstellung von Plakatwänden.

## Revendications

1. Une couverture, pour des structures ou objets, pour la réduction de la pollution atmosphérique comprenant :
- un substrat textile (2)
- une couche (3) de matériau polymérique superposée sur ou coïncidant avec au moins une partie du substrat textile (2) ;
- une multiplicité de particules (4) de matériau photocatalytique positionnées sur au moins une partie de surface du matériau polymérique et retenues par adhésion sur ledit matériau polymérique ; ladite couverture étant **caractérisée en ce que** toutes les particules (4) de matériau photocatalytique dépassent au moins partiellement de la couche (3) de matériau polymérique du côté opposé au substrat textile (2) et sont au moins partiellement en contact direct avec l'air environnant la couverture.

2. La couverture selon la revendication 1, **caractérisée en ce que** le matériau photocatalytique est du dioxyde de titane.

3. La couverture selon l'une quelconque des revendications précédentes, **caractérisée en ce que** les particules (4) ont des dimensions caractéristiques comprises entre 20 nanomètres et 5 microns, de préférence 180 nanomètres.

4. La couverture selon l'une quelconque des revendications précédentes, **caractérisée en ce que** les particules (4) ont une forme essentiellement sphérique.

5. La couverture selon l'une quelconque des revendications précédentes, **caractérisée en ce que** le matériau polymérique est un polymère thermoplastique.

6. La couverture selon l'une quelconque des revendications précédentes, **caractérisée en ce que** la couche de matériau polymérique a une densité de surface comprise entre 5 grammes par mètre carré et 500 grammes par mètre carré, de préférence 100 grammes par mètre carré.

7. La couverture selon l'une quelconque des revendications précédentes, **caractérisée en ce que** le substrat textile (2) consiste en un seul fil naturel (100).

8. La couverture selon l'une quelconque des revendications précédentes de 1 à 4, **caractérisée en ce que** le substrat textile (2) consiste en un fil synthétique (100).

9. La couverture selon la revendication 8, **caractérisée en ce que** la couche (3) de matériau polymérique est définie par la surface extérieure du fil (100) et coïncide avec ladite surface.

10. Un procédé de fabrication d'une couverture pour la réduction de la pollution atmosphérique, pour des structures ou objets, comprenant les phases consistant à : prévoir un substrat textile (2) avec une couche (3) de matériau polymérique et déposer sur la surface de la couche (3) polymérique une multiplicité de particules (4) de matériau photocatalytique ; lesdites particules (4) de matériau photocatalytique étant positionnées sur au moins une partie de surface du matériau polymérique et étant retenues par adhésion sur ledit matériau polymérique, et déposer la couche (3) de matériau polymérique sur le substrat textile (2), ledit procédé étant **caractérisé en ce que** les particules (4) de matériau photocatalytique sont déposées uniquement sur la surface de la couche (3) de matériau polymérique de manière à être au moins partiellement exposées à l'air environnant la couverture.

11. Le procédé selon la revendication 10, **caractérisé en ce que** la phase consistant à déposer la couche (3) de matériau polymérique sur le substrat textile (2) comprend la phase consistant à appliquer sur le tissu la couche (3) de matériau polymérique à l'état liquéfié.

12. Le procédé selon la revendication 11, **caractérisé en ce que** le matériau polymérique liquéfié est appliqué sous forme laminaire en utilisant une tête d'extrusion.

13. Le procédé selon la revendication 11, **caractérisé en ce que** le matériau polymérique liquéfié est appliqué sur le tissu par pulvérisation.

14. Le procédé selon l'une quelconque des revendications précédentes de 10 à 13, **caractérisé en ce que** la phase consistant à appliquer des particules (4) photocatalytiques sur la couche (3) de matériau polymérique comprend la phase consistant à appliquer des particules (4) photocatalytiques ayant une forme essentiellement sphérique.

15. Le procédé selon l'une quelconque des revendications précédentes de 10 à 14, **caractérisé en ce que** les particules (4) de matériau photocatalytique sont déposées sur la couche (3) de matériau polymérique avant que la couche polymérique se solidifie.

16. Le procédé selon la revendication 11, **caractérisé en ce que** les particules (4) de matériau photocatalytique sont déposées sur la couche polymérique en phase aqueuse pendant la solidification de cette même couche polymérique.

17. Utilisation d'une couverture pour la réduction de la pollution atmosphérique selon l'une quelconque des revendications précédentes de 1 à 10 pour réaliser de l'herbe artificielle.

18. Utilisation d'une couverture pour la réduction de la pollution atmosphérique selon l'une quelconque des revendications de 1 à 10 pour réaliser des barrières d'absorption acoustique.

19. Utilisation d'une couverture pour la réduction de la pollution atmosphérique selon l'une quelconque des revendications de 1 à 10 pour réaliser des feuilles artificielles.

20. Utilisation d'une couverture pour la réduction de la pollution atmosphérique selon l'une quelconque des revendications de 1 à 10 pour réaliser des arbres artificiels.

21. Utilisation d'une couverture pour la réduction de la pollution atmosphérique selon l'une quelconque des revendications de 1 à 10 pour réaliser des bâches destinées à couvrir des remorques de camions.

22. Utilisation d'une couverture pour la réduction de la pollution atmosphérique selon l'une quelconque des revendications de 1 à 10 pour réaliser des panneaux publicitaires.
